(19) Europäisches Patentamt / European Patent Office / Office européen des brevets

(11) **EP 4 067 309 A1**

(12) **EUROPEAN PATENT APPLICATION**
published in accordance with Art. 153(4) EPC

(43) Date of publication:
**05.10.2022 Bulletin 2022/40**

(21) Application number: **20891684.1**

(22) Date of filing: **19.11.2020**

(51) International Patent Classification (IPC):
*C01G 23/047* (2006.01)   *C09C 1/36* (2006.01)
*C09C 3/06* (2006.01)   *C09D 17/00* (2006.01)
*C09D 201/00* (2006.01)   *C09D 7/61* (2018.01)
*C09D 7/63* (2018.01)   *C09D 7/65* (2018.01)

(52) Cooperative Patent Classification (CPC):
**C01G 23/047; C09C 1/36; C09C 3/06; C09D 7/61;
C09D 7/63; C09D 7/65; C09D 17/00; C09D 201/00**

(86) International application number:
**PCT/JP2020/043249**

(87) International publication number:
**WO 2021/106747 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.11.2019  JP 2019216316**

(71) Applicant: **Ishihara Sangyo Kaisha, Ltd.
Osaka-shi, Osaka 550-0002 (JP)**

(72) Inventors:
• **TAKIMOTO, Tadahiko**
  **Osaka-shi, Osaka 550-0002 (JP)**
• **KATO, Hironori**
  **Osaka-shi, Osaka 550-0002 (JP)**

(74) Representative: **Grünecker Patent- und
Rechtsanwälte
PartG mbB
Leopoldstraße 4
80802 München (DE)**

(54) **DISPERSION OF TITANIUM DIOXIDE MICROPARTICLES IN ORGANIC SOLVENT, METHOD FOR PRODUCING SAME, AND USE OF SAME**

(57)    Provided are: dispersion in which titanium dioxide microparticles are highly dispersed in an organic solvent; and a method for producing the dispersion.

The dispersion comprises at least titanium dioxide microparticles, an organic solvent, a silane coupling agent, and a dispersant having a basic adsorptive group, wherein the ratio of the mass of the dispersant to that of the silane coupling agent is 15 to 75 % by mass. It is preferred that the ratio of the total mass of the silane coupling agent and the dispersant to the mass of the titanium dioxide microparticles is 10 to 40% by mass. The dispersion is produced by dispersing the titanium dioxide microparticles together with the above-specified amounts of the silane coupling agent and the dispersant having a basic adsorptive group in the organic solvent.

**Description**

**TECHNICAL FIELD**

The present invention relates to an organic solvent dispersion of titanium dioxide fine particles, a method for producing the dispersion, a coating composition containing the organic solvent dispersion, and uses such as a coating film containing the organic solvent dispersion or the coating composition.

**BACKGROUND ART**

Titanium dioxide fine particles are a useful material having a visible light transmittance, an ultraviolet ray shielding property, a high refractive index and the like, and are used such that the titanium dioxide fine particles are dispersed in an organic solvent to prepare an organic solvent dispersion or coating composition, and the organic solvent dispersion or coating composition is applied or sprayed to a substrate to form a coating film containing the titanium dioxide fine particles.

The titanium dioxide fine particles are used for, for example, forming a hard coat, an ultraviolet ray shielding film or the like having a high visible light transmittance (i.e., transparency) and a high refractive index on a surface of a synthetic resin lens or film. Also, an antireflection film is provided on a display surface of a flat panel display (FPD) such as a liquid crystal display (LCD), a plasma display (PDP) or an electroluminescence display (EL) for the purpose of, for example, preventing reflection of a light source or a face, and titanium dioxide fine particles are used in a high refractive index layer of the antireflection film.

When dispersed in an organic solvent, titanium dioxide fine particles are likely to aggregate, and even when a coating film is formed using a coating composition obtained by blending the aggregated titanium dioxide in a binder resin, the visible light transmittance or the like decreases. Thus, studies have been conducted on an organic solvent dispersion in which titanium dioxide fine particles are highly dispersed. For example, Patent Literature 1 discloses a titanium dioxide particle dispersion liquid containing titanium dioxide particles having an average primary particle size of 2 to 80 nm and an average secondary particle size of 50 to 150 nm, a nonionic surfactant, and a glycol ether-based organic solvent. Patent Literature 2 discloses a transparent titanium dioxide organosol containing titanium dioxide sol particles coated with a hydrous oxide of silicon, a dispersion medium of a mono- or di-lower alkyl ether of ethylene glycol or propylene glycol, and a polymer-based dispersing agent having an amino group and having a molecular weight of 5,000 to 50,000.

**CITATION LIST**

**PATENT LITERATURE**

   PATENT LITERATURE 1: WO 2014/132607 A1
   PATENT LITERATURE 2: JP 2009-227500 A

**SUMMARY OF INVENTION**

**TECHNICAL PROBLEM**

In the above-described conventional techniques and the like, the dispersibility of titanium dioxide fine particles is improved, but is not sufficient when a coating film containing titanium dioxide fine particles is used in, for example, optics applications such as lenses, electronic device applications for various displays, and the like, and thus a coating film having a higher visible light transmittance (i.e., transparency) is required. In view of such circumstances, an organic solvent dispersion of titanium dioxide fine particles wherein the dispersion has high dispersibility of the titanium dioxide fine particles is still required.

**SOLUTION TO PROBLEM**

The present inventors have intensively studied to solve the above-described problems. As a result, the present inventors have found that by using specific amounts of a silane coupling agent and a dispersing agent in combination, titanium dioxide fine particles can be highly dispersed in an organic solvent, and then the present invention has been completed.

That is, the present invention is as follows, for example.

(1) An organic solvent dispersion of titanium dioxide fine particles, comprising titanium dioxide fine particles, an organic solvent, a silane coupling agent, and a dispersing agent having a basic adsorptive group, wherein a mass ratio of the dispersing agent to the silane coupling agent is 15 mass% to 75 mass%.

(2) The organic solvent dispersion of titanium dioxide fine particles according to (1), wherein a mass ratio of a total amount of the silane coupling agent and the dispersing agent to the titanium dioxide fine particles is 10 mass% to 40 mass%.

(3) The organic solvent dispersion of titanium dioxide fine particles according to (1) or (2), wherein a surface of the titanium dioxide fine particles is coated with an oxide and/or hydroxide of aluminum.

(4) The organic solvent dispersion of titanium dioxide fine particles according to any one of (1) to (3), wherein the titanium dioxide fine particles have a rutile-type crystal.

(5) A method for producing an organic solvent dispersion of titanium dioxide fine particles, the method comprising the step of dispersing, in an organic solvent, the titanium dioxide fine particles, a silane coupling agent, and a dispersing agent having a basic adsorptive group.

(6) The production method according to (5), wherein a mass ratio of the dispersing agent having a basic adsorptive group to the silane coupling agent is 15 mass% to 75 mass%.

(7) The production method according to (5) or (6), wherein the dispersing step is conducted by a wet dispersion using a bead medium.

(8) A coating composition comprising at least the organic solvent dispersion of titanium dioxide fine particles according to any one of (1) to (4) and a binder resin.

(9) A coating film comprising the organic solvent dispersion of titanium dioxide fine particles according to any one of (1) to (4) or the coating composition according to (8).

## ADVANTAGEOUS EFFECTS OF INVENTION

According to the present invention, titanium dioxide fine particles can be highly dispersed in an organic solvent by using specific amounts of a silane coupling agent and a dispersing agent having a basic adsorptive group in combination as a dispersion containing titanium dioxide fine particles and an organic solvent.

According to the present invention, for example, the following effects can also be obtained.

When this organic solvent dispersion is used, a coating film having a high visible light transmittance (i.e., transparency) can be formed. Specifically, a high-refractive-index layer having a high transparency can be formed, so that an antireflection film having a higher transparency can be produced.

## DESCRIPTION OF EMBODIMENTS

The organic solvent dispersion according to the present invention contains titanium dioxide fine particles. The average primary particle size of the titanium dioxide fine particles is preferably 3 to 200 nm (i.e., 3 nm or more and 200 nm or less), more preferably 5 to 100 nm (i.e., 5 nm or more and 100 nm or less), and still more preferably 10 to 100 nm (i.e., 10 nm or more and 100 nm or less). Generally, titanium dioxide fine particles having such an average primary particle size have a higher visible light transmittance compared with titanium dioxide particles having a larger average primary particle size (e.g., titanium dioxide particles which are used for pigments and have an average primary particle size of about 0.2 to 0.5 $\mu$m). Therefore, by using titanium dioxide fine particles having the above average primary particle size, an organic solvent dispersion having a higher transmittance can be produced. The particle sizes of randomly selected 200 particles are measured by means of an electron microscope, and an average value of the particle sizes is calculated and defined as the average primary particle size of titanium dioxide fine particles (This measuring method is also referred to as an "electron photomicrograph method" in the present application).

The shape of the titanium dioxide fine particle is not particularly limited, and the titanium dioxide fine particle having any shape such as a spherical shape, a rod shape, a needle shape, a spindle shape, or a plate shape can be used. The above average primary particle size in the case of a shape other than a spherical shape is defined by an average of lengths on the short axis side for rod-shaped particles, needle-shaped particles and spindle-shaped particles, and defined by an average of lengths of diagonal lines of surfaces for plate-shaped particles.

The crystal structure of the titanium dioxide fine particle is not particularly limited, and the titanium dioxide fine particles having a crystal structure of anatase type, rutile type, brookite type or the like can be used. However, since the rutile-type crystal has a lower photocatalytic activity and a higher refractive index as compared with the anatase-type crystal, it is preferred to use titanium dioxide fine particles having a rutile-type crystal for more effectively imparting a high light resistance and a high refractive index to a coating film. The titanium dioxide fine particles may include a compound represented by metatitanate ($TiO_2 \cdot nH_2O$) or orthotitanate ($Ti(OH)_4$) in addition to titanium dioxide ($TiO_2$).

The titanium dioxide fine particles can be produced by means of various known methods. For example, the following methods: a method in which a titanium tetrachloride aqueous solution is neutralized and hydrolyzed with an alkali and the resulting hydrous titanium dioxide is fired (this is also referred to as a "firing method" in the present application); a method in which a hydrous titanium dioxide obtained by hydrolyzing a titanyl sulfate aqueous solution is heat-treated with sodium hydroxide and the resulting reaction product is heat-aged with an acid; and a method in which a titanium tetrachloride aqueous solution is neutralized and hydrolyzed with an alkali (this is also referred to as a "wet process" in the present application) can be used. Generally, in the firing method, spherical titanium dioxide fine particles can be obtained, and in the wet process, spindle-shaped titanium dioxide fine particles can be obtained. Also, in both the firing method and the wet process, rutile-type crystal titanium dioxide fine particles can be obtained.

Spherical titanium dioxide fine particles obtained by the firing method are more preferred because crystallinity is improved by firing, and photocatalytic activity is reduced, so that a higher light resistance can be more effectively imparted to a coating film. Also, as for titanium dioxide fine particles obtained by the wet process, generally, a produced aqueous dispersion of the titanium dioxide fine particles is dispersed in an organic solvent by a solvent replacement without conducting drying or firing. However, in the present invention, it is more preferred that drying and/or firing are conducted, and titanium dioxide powder of the titanium dioxide fine particles is dispersed directly in an organic solvent. When drying and/or firing are conducted, the amount of water contained therein decreases, and the amount of water attached to titanium dioxide fine particles decreases as well, so that the titanium dioxide fine particles are easily dispersed in an organic solvent. The drying temperature is preferably about 80 to 150 °C, and the firing temperature is preferably about 150 to 400 °C.

The surfaces of the titanium dioxide fine particles may be coated with another inorganic compound. As the inorganic compound used for the coating, known surface treatment materials can be used. For example, an oxide and/or hydroxide of at least one of zinc, titanium, cerium, iron, silicon and aluminum can be used. It is more preferred that the surfaces of titanium dioxide fine particles are coated with an oxide and/or hydroxide of aluminum. The coating amount is preferably 1% to 30% (i.e., 1% or more and 30% or less) in terms of a mass of $TiO_2$. By coating the titanium oxide particles with an inorganic compound, the photocatalytic activity of titanium dioxide can be more effectively reduced, and the higher light resistance can be imparted to the coating film.

The organic solvent dispersion of the present invention contains an organic solvent. The organic solvent used is not particularly limited, and known organic solvents can be used. Ketones or (poly)alkylene glycol monoalkyl ethers are preferred from the viewpoint of compatibility with a binder resin, dispersibility of titanium dioxide fine particles, applicability to a substrate, and the like.

Examples of the ketones include methyl ethyl ketone, methyl isobutyl ketone, cyclohexanone, 2-heptanone, 3-heptanone, diacetone alcohol (4-hydroxy-4-methylpentane-2 one), and 4-hydroxy-4-methylhexane-2-one.

Examples of the (poly)alkylene glycol monoalkyl ethers include ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monomethyl ether acetate, propylene glycol monoethyl ether, propylene glycol monoethyl ether acetate, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether.

The organic solvent dispersion of the present invention contains a silane coupling agent. The silane coupling agent refers to an organosilicon compound having both an organic functional group "X" and a hydrolyzable group "OR" in one molecule. In the hydrolyzable group "OR", "O" is an oxygen atom, and "R" generally represents a hydrogen atom or an alkyl group having 1 to 22 (1 or more and 22 or less) carbon atoms. The alkyl group may be linear, branched, or cyclic. When there is more than one hydrolyzable group "OR" in the molecule of the silane coupling agent, each of "R" may be the same or mutually different. Generally, the organic functional group "X" is preferably at least one selected from a methacrylic group, an acrylic group, a vinyl group, an epoxy group, an amino group, a mercapto group, a sulfide group, an isocyanate group, and the like. When there is more than one organic functional group "X" in the molecule of the silane coupling agent, each of "X" may be the same or mutually different.

In the organic solvent dispersion, the silane coupling agent functions as a dispersion aid for easily deaggregating the aggregated titanium dioxide fine particles.

Examples of the above-described silane coupling agent include methacrylsilane, acrylsilane, vinylsilane and epoxysilane. Specific examples of the methacrylsilane include 3-methacryloxypropylmethyldimethoxysilane, 3-methacryloxypropyltrimethoxysilane, 3-methacryloxypropylmethyldiethoxysilane, 3-methacryloxypropyltriethoxysilane and methacryloxyoctyltrimethoxysilane. Examples of the acrylsilane include 3-acryloxypropyltrimethoxysilane. Examples of the vinylsilane include vinyltrimethoxysilane, vinyltriethoxysilane and octenyltrimethoxysilane. Examples of the epoxysilane include glycidoxypropyltrimethoxysilane and glycidoxyoctyltrimethoxysilane.

The organic solvent dispersion of the present invention contains a dispersing agent having a basic adsorptive group. In the organic solvent dispersion of the present invention, the dispersing agent contributes to reducing reaggregation of in an organic solvent after deaggregation of titanium dioxide fine particles to maintain (i.e., stabilize) a state in which the titanium dioxide fine particles. In the present invention, a dispersing agent having a basic adsorptive group is used as the dispersing agent and the dispersing agent having a basic adsorptive group and a silane coupling agent are used in combination to reliably protect the surfaces of titanium dioxide fine particles, so that dispersion stabilization can be achieved.

Examples of the dispersing agent having a basic adsorptive group include primary amines, secondary amines, tertiary amines, and quaternary ammonium or salts thereof. These amine-based dispersing agents include, for example, an amino group as a basic adsorptive group, or a partial structure in which one or two or more hydrogen atoms of the amino group are replaced by an alkyl group or the like. When the dispersing agent has such a basic adsorptive group, the amine value of the dispersing agent can be measured by the following method. A dispersing agent having an amine value more than 5 mg KOH/g has sufficiently high basicity, so that a desired dispersion effect can be obtained. The amine value represents the amount of the base per 1 g of the solid content obtained by removing the solvent from the dispersing agent sample in terms of a mass of the equivalent amount of KOH (mg KOH/g). The amine value can be measured by the known method specified in ASTM D 2074, JIS K 7237 or the like. Specifically, the amine value is measured by the following method.

(Method for measuring amine value)

0.5 to 1.5 g of the dispersing agent sample is precisely weighed and taken in a 100 mL beaker, and then dissolved in 50 mL of acetic acid. The solution is subjected to neutralization titration with a $HClO_4$ (perchloric acid) acetic acid solution at 0.1 mol/L using an automatic titrator equipped with a pH electrode. The inflection point of the titration pH curve is defined as a titration end point, and the amine value is determined from the following equation.

$$\text{Amine value [mgKOH/g]} = (561 \times V)/(W \times S)$$

[wherein "W" is a weighed amount [g] of a dispersing agent sample, "V" is a titration amount [mL] at a titration end point, and "S" is a solid content concentration [mass%] of the dispersing agent sample].

The dispersing agent having a basic adsorptive group is preferably an amine-based dispersing agent having an amino group, and for example, commercially available products such as DISPERBYK (registered trademark)-163 (manufactured by BYK) and Solsperse (registered trademark) 20000, Solsperse (registered trademark) 39000 and Solsperse (registered trademark) 56000 (manufactured by Lubrizol Japan Ltd.), 2-diethylaminoethyl methacrylate, and the like can be used.

In the organic solvent dispersion of the present invention, the mass ratio of a dispersing agent having a basic adsorptive group to a silane coupling agent is 15 mass% to 75 mass% (i.e., 15 mass% or more and 75 mass% or less). The titanium dioxide fine particles are deaggregated with the silane coupling agent to turn into a dispersed state, and the dispersing agent having a basic adsorptive group contributes to maintenance (i.e., stabilization) of this state. Thus, the mass ratio of the dispersing agent having a basic adsorptive group to the silane coupling agent is preferred to be 15 mass% to 75 mass%. On the other hand, if the mass ratio of the dispersing agent having a basic adsorptive group to the silane coupling agent is more than 75 mass%, the contained amount of the silane coupling agent decreases, so that a function thereof, namely, a function allowing titanium dioxide fine particles aggregated in an organic solvent to be easily deaggregated by wet dispersion or the like tends to be impaired, and the function cannot be sufficiently exhibited. If the mass ratio of the dispersing agent having a basic adsorptive group is less than 15 mass% as described above, the contained amount of the dispersing agent decreases, so that the function of the dispersing agent cannot be sufficiently exhibited. Thus, the mass ratio of the dispersing agent having a basic adsorptive group to the silane coupling agent is 15 mass% to 75 mass%, more preferably 15 mass% to 70 mass% (i.e., 15 mass% or more and 70 mass% or less), and still more preferably 20 mass% to 70 mass% (i.e., 20 mass% or more and 70 mass% or less).

In the organic solvent dispersion of the present invention, the mass ratio of the total amount of the silane coupling agent and the dispersing agent to the titanium dioxide fine particles is 10 mass% to 40 mass% (i.e., 10 mass% or more and 40 mass% or less). When both the silane coupling agent and the dispersing agent having a basic adsorptive group are contained in the mass ratio of 10 mass% or more with respect to the titanium dioxide fine particles, the above-described effect can be reliably exhibited. On the other hand, even if the silane coupling agent and the dispersing agent having a basic adsorptive group is contained in the mass ratio of more than 40 mass%, the above-described effect reaches its limit, and if the contained amount of organic compounds in the silane coupling agent and the dispersing agent having a basic adsorptive group increases, the hardness or the refractive index of a coating film decreases. Therefore, 40 mass% or less is preferred. For these reasons, the mass ratio of the total amount of the silane coupling agent and the dispersing agent having a basic adsorptive group to the titanium dioxide fine particles is more preferably 15 mass% to 35 mass% (i.e., 15 mass% or more and 35 mass% or less), and still more preferably 15 mass% to 30 mass% (i.e., 15 mass% or more and 30 mass% or less).

The organic solvent dispersion of the present invention can be prepared by mixing and dispersing, in an organic solvent, the above-described titanium dioxide fine particles, silane coupling agent, and dispersing agent having a basic adsorptive group, thereby dispersing the titanium dioxide fine particles in an organic solvent. In this dispersion, a dispersion aid, a dispersion stabilizer, a defoamer, a thickener, inorganic oxide fine particles other than titanium dioxide fine particles, and the like may be added in addition to the silane coupling agent and the dispersing agent having a basic adsorptive group.

As for the above-described dispersion, known dispersers can be used. For example, a paint shaker, a dissolver, a high-speed stirrer, a kneader, an ultrasonic disperser, a high-pressure homogenizer, a ball mill, a bead mill, a sand mill, a horizontal media mill disperser, a colloid mill, or the like can be used. From the viewpoint of dispersibility, it is preferred to use a bead medium during dispersion. When a bead mill is used, a bead medium having a diameter of 1 mm or less is preferred, and a bead medium having a diameter of 0.5 mm or less is more preferred. In the above-described dispersion, the dispersion intensity varies depending on the type of a dispersion apparatus or a medium used. Therefore, the dispersion time may be appropriately adjusted according to the type of the dispersion apparatus or the medium.

The dispersion can be conducted two or more times. For example, it is preferred to divide the dispersion into preliminary dispersion and main dispersion. The surfaces of the titanium dioxide fine particles are wetted by the preliminary dispersion, so that air layers on the surfaces can be replaced by the organic solvent. Therefore, dispersion rapidly proceeds in the subsequent main dispersion. As a result, the dispersibility of the titanium dioxide fine particles in the organic solvent can be effectively enhanced. Preferably, in the main dispersion, a bead medium having a diameter smaller than that in the preliminary dispersion is used. This enables further enhancement of the dispersibility of the titanium dioxide fine particles in the organic solvent.

The coating composition of the present invention contains the above-described organic solvent dispersion of titanium dioxide fine particles, and a binder resin. Since the organic solvent dispersion of the present invention has a high transmittance, a coating film having a high visible light transmittance (i.e., transparency) can be formed using a coating agent composition using this organic solvent dispersion.

The binder resin used in the coating composition is not particularly limited as long as the stability, high refractive index, and visible light transmittance (i.e., transparency) of a coating film obtained from the coating composition can be achieved. As the binder resin, for example, an alkyd-based resin, an acryl-based resin, a melamine-based resin, a urethane-based resin, an epoxy-based resin, a silicon-based resin, or the like can be used. In addition, a polyester-based resin, a polyamide acid-based resin, a polyimide-based resin, a styrene-maleic acid-based resin, a styrene-maleic anhydride-based resin or the like can be used. Further, various acrylic acid-based monomers and acrylate-based monomers can also be used. Examples of particularly preferred resins and monomers as the binder resin include urethane-based resins, acryl-based resins, acrylic acid-based monomers, polyamide acid-based resins, polyimide-based resins, styrene-maleic acid-based resins, and styrene-maleic anhydride-based resins. The binder resins may be used alone or in combination of two or more thereof.

Further, the coating composition may contain various additives, in addition to the organic solvent dispersion of titanium dioxide fine particles and the binder resin. Specifically, a dispersing agent, a pigment, a filler, an aggregate, a thickener, a flow control agent, a leveling agent, a curing agent, a crosslinking agent, a curing catalyst, and the like can be blended.

The coating composition of the present invention can be prepared by mixing the above-described organic solvent dispersion of titanium dioxide fine particles and binder resin, and if needed, the additives. In the mixing step, it is preferred to use, for example, the above-described dissolver or high-speed stirrer.

The organic solvent dispersion or coating composition of the present invention can be applied to a substrate, and if necessary, dried and/or fired, thereby forming a coating film on the substrate. The substrate is not particularly limited, and various materials such as glass, polymer, ceramic and metal can be used. The coating method is not particularly limited, and known methods can be used. Examples of the coating method include: a method for coating using a spin coater, a dip coater, a die coater, a slit coater, a bar coater, a gravure coater, or the like; a Langmuir-Blodgett (LB) film method; a self-assembling method; and a spray coating method, for example.

As for the drying method and the firing method, there is no particular limitation, and known methods are used. Examples thereof include drying under normal pressure or reduced pressure, and natural drying. The heating method in drying by heating or firing is not particularly limited, and examples thereof include methods for heating using an apparatus such as a hot plate or an oven. The drying temperature is preferably about 80 to 150 °C, and the firing temperature is preferably about 150 to 400 °C.

The coating film thickness can be appropriately set according to a use, and is, for example, preferably 0.005 $\mu$m to 2 $\mu$m (i.e., 0.005 $\mu$m or more and 2 $\mu$m or less), and more preferably 0.01 $\mu$m to 1 $\mu$m (i.e., 0.01 $\mu$m or more and 1 $\mu$m or less). The visible light transmittance of the coating film can be measured as a haze by means of a haze meter. Depending on the coating film thickness, the haze is preferably 5% or less, more preferably 2.5% or less, and still more preferably 1.5% or less. Also, in a case of using the coating film as a high-refractive-index layer, the refractive index of the coating film is preferably 1.60 or more, and preferably 1.80 or more. The refractive index can be measured by means of an ellipsometry, and calculated.

The coating film formed on the substrate may be multi-layered. When the coating film is multi-layered, each layer may be a coating film of the same quality or may be a combination of different coating films. Also, by alternately stacking the high-refractive-index layers and low-refractive-index layers on the substrate, an antireflection film can be formed on the substrate. The antireflection film may have any configuration as long as it includes the above-described high-refractive-index layer. For example, the antireflection film may be an antireflection film having a high-refractive-index layer and a low-refractive-index layer in this order on a substrate or may be an antireflection film having a low-refractive-index layer, a high-refractive-index layer and a low-refractive-index layer in this order on a substrate. By adjusting the film thickness and the refractive index of each layer in such a layer configuration, a desired antireflection film can be designed.

**EXAMPLES**

The present invention will be described in more detail using the examples and the comparative examples, described below, but the present invention is not limited to the examples.

(Example 1)

The following materials: 20 parts by mass of TTO-51 A (manufactured by ISHIHARA SANGYO KAISHA, LTD.) (powder) which is titanium dioxide fine particles produced by the above-described "firing method", the titanium dioxide fine particles having a rutile type as a crystal type, being surface-treated with aluminum hydroxide ($Al(OH)_3$), and having an average primary particle size of 20 nm; 2.4 parts by mass of 3-methacryloxypropyltriethoxysilane KBM-503 (manufactured by Shin-Etsu Silicone Co.) as a silane coupling agent; 0.6 parts by mass of Solsperse (registered trademark) 20000 (manufactured by Lubrizol Japan Ltd., amine value: 32 mg KOH/g) as an amine-based dispersing agent; and 77 parts by mass of methyl ethyl ketone (MEK) as an organic solvent were put in a mixing container, and wet-dispersed with a paint shaker (1400-0H manufactured by Red Devil Company) for 4 hours using zircon beads having a diameter of 0.1 mm. The obtained dispersion liquid was centrifuged at 2400 G for 13 minutes with a centrifuge (H-19α manufactured by KOKUSAN Co., Ltd.), coarse particles were settled, and a supernatant was collected to obtain an organic solvent dispersion of titanium dioxide fine particles.

The mass ratio of the amine-based dispersing agent in this organic solvent dispersion to the silane coupling agent was 25 mass%. The mass ratios of the silane coupling agent and the amine-based dispersing agent to the titanium dioxide fine particles were 12 mass% and 3 mass%, respectively, and the mass ratio of the total amount of both the agents to the titanium dioxide fine particles was 15 mass%.

(Example 2)

With respect to "Example 1", the mass ratio of the amine-based dispersing agent in the organic solvent dispersion to the silane coupling agent was changed to 66.7 mass%. Specifically, the component ratio of each material used in the wet dispersion was changed to 5 parts by mass of the titanium dioxide fine particles, 0.9 parts by mass of the silane coupling agent, 0.6 parts by mass of the amine-based dispersing agent, and 93.5 parts by mass of the organic solvent. The time of wet dispersion was set to 3 hours, and as the titanium dioxide fine particles, unfired titanium dioxide fine particles (i.e., powder) described later were used. Except for the above, an organic solvent dispersion of titanium dioxide fine particles was obtained in the same manner as in "Example 1".

The mass ratios of the silane coupling agent and the amine-based dispersing agent to the titanium dioxide fine particles in this organic solvent dispersion were 18 mass% and 12 mass%, respectively, and the mass ratio of the total amount of both the agents to the titanium dioxide fine particles was 30 mass%.

The titanium dioxide fine particles used in Example 2 were produced as follows.

A titanium tetrachloride aqueous solution was added to a tin tetrachloride aqueous solution so that the ratio of $SnO_2/TiO_2$ can be 1, and the mixture was heated and hydrolyzed at 100 °C for 1 hour to obtain a slurry of tin-containing rutile-type titanium oxide (33 g/L) (which corresponds to 150 g in terms of tin-containing rutile-type titanium oxide). Subsequently, the slurry was neutralized with an aqueous sodium hydroxide solution (20%) while being cooled to 80°C, and the pH was adjusted to 10.0. Subsequently, a sodium aluminate aqueous solution (0.6 L) was added thereto so as to be 15 mass% in terms of $Al_2O_3$ with respect to the above-described rutile-type titanium dioxide, and the mixture was then neutralized to pH 7.0 with a sulfuric acid aqueous solution (5%) to deposit aluminum hydroxide, thereby obtaining a slurry of rutile-type titanium dioxide surface-treated with aluminum hydroxide. This slurry was cooled to room temperature, then filtered with Nutsche, washed with water, and then dried at 150°C to obtain unfired titanium dioxide fine particles.

(Example 3)

With respect to "Example 1", the organic solvent was changed to propylene glycol monomethyl ether acetate (PGMEA). In addition, the component ratio of each material used in the wet dispersion was changed to 24 parts by mass of the titanium dioxide fine particles, 2.88 parts by mass of the silane coupling agent, 0.72 parts by mass of the amine-based dispersing agent and 72.4 parts by mass of the organic solvent. Except for the above, an organic solvent dispersion of titanium dioxide fine particles was obtained in the same manner as in "Example 1".

The mass ratio of the amine-based dispersing agent in this organic solvent dispersion to the silane coupling agent was 25 mass%. In addition, the mass ratios of the silane coupling agent and the amine-based dispersing agent to the titanium dioxide fine particles were 12 mass% and 3 mass%, respectively, and the mass ratio of the total amount of both the agents to the titanium dioxide fine particles was 15 mass%.

(Example 4)

With respect to "Example 1", the amine-based dispersing agent was changed to 2-diethylaminoethyl methacrylate (DEM) (amine value (theoretical value): 300 mg KOH/g). In addition, the component ratio of each material used in the wet dispersion was changed to 20 parts by mass of the titanium dioxide fine particles, 4.8 parts by mass of the silane coupling agent, 1.2 parts by mass of the amine-based dispersing agent and 74 parts by mass of the organic solvent. Except for the above, an organic solvent dispersion of titanium dioxide fine particles was obtained in the same manner as in "Example 1".

The mass ratio of the amine-based dispersing agent in this organic solvent dispersion to the silane coupling agent was 25 mass%. In addition, the mass ratios of the silane coupling agent and the amine-based dispersing agent to the titanium dioxide fine particles were 24 mass% and 6 mass%, respectively, and the mass ratio of the total amount of both the agents to the titanium dioxide fine particles was 30 mass%.

(Example 5)

With respect to "Example 3", the silane coupling agent was changed to 3-acryloxypropyltrimethoxysilane KBM-5103 (manufactured by Shin-Etsu Silicone Co.). In addition, the component ratio of each material used in the wet dispersion was changed to 20 parts by mass of the titanium dioxide fine particles, 2.4 parts by mass of the silane coupling agent, 0.6 parts by mass of the amine-based dispersing agent and 77 parts by mass of the organic solvent. Except for the above, an organic solvent dispersion of titanium dioxide fine particles was obtained in the same manner as in "Example 3".

The mass ratio of the amine-based dispersing agent in this organic solvent dispersion to the silane coupling agent was 25 mass%. In addition, the mass ratios of the silane coupling agent and the amine-based dispersing agent to the titanium dioxide fine particles were 12 mass% and 3 mass%, respectively, and the mass ratio of the total amount of both the agents to the titanium dioxide fine particles was 15 mass%.

(Example 6)

With respect to "Example 3", the silane coupling agent was changed to methacryloxyoctyltrimethoxysilane KBM-5803 (manufactured by Shin-Etsu Silicone Co.). In addition, the component ratio of each material used in the wet dispersion was changed to 20 parts by mass of the titanium dioxide fine particles, 2.4 parts by mass of the silane coupling agent, 0.6 parts by mass of the amine-based dispersing agent and 77 parts by mass of the organic solvent. Except for the above, an organic solvent dispersion of titanium dioxide fine particles was obtained in the same manner as in "Example 3".

The mass ratio of the amine-based dispersing agent in this organic solvent dispersion to the silane coupling agent was 25 mass%. In addition, the mass ratios of the silane coupling agent and the amine-based dispersing agent to the titanium dioxide fine particles were 12 mass% and 3 mass%, respectively, and the mass ratio of the total amount of both the agents to the titanium dioxide fine particles was 15 mass%.

(Example 7)

With respect to "Example 3", the silane coupling agent was changed to octenyltrimethoxysilane KBM-1083 (manufactured by Shin-Etsu Silicone Co.), and the amine-based dispersing agent was changed to DISPERBYK (registered trademark)-163 (manufactured by BYK, active ingredient: 45%, amine value: 10 mg KOH/g). In addition, the component ratio of each material used in the wet dispersion was changed to 20 parts by mass of the titanium dioxide fine particles, 2.4 parts by mass of the silane coupling agent, 0.6 parts by mass of the amine-based dispersing agent and 77 parts by mass of the organic solvent. Except for the above, an organic solvent dispersion of titanium dioxide fine particles was obtained in the same manner as in "Example 3".

The mass ratio of the amine-based dispersing agent in this organic solvent dispersion to the silane coupling agent was 25 mass%. In addition, the mass ratios of the silane coupling agent and the amine-based dispersing agent to the titanium dioxide fine particles were 12 mass% and 3 mass%, respectively, and the mass ratio of the total amount of both the agents to the titanium dioxide fine particles was 15 mass%.

(Example 8)

With respect to "Example 3", the silane coupling agent was changed to octenyltrimethoxysilane KBM-1083 (manufactured by Shin-Etsu Silicone Co.). In addition, the component ratio of each material used in the wet dispersion was changed to 23 parts by mass of the titanium dioxide fine particles, 2.8 parts by mass of the silane coupling agent, 0.7 parts by mass of the amine-based dispersing agent and 73.5 parts by mass of the organic solvent. The time of wet dispersion was 6 hours and 40 minutes. Except for the above, an organic solvent dispersion of titanium dioxide fine particles was obtained in the same manner as in "Example 3".

The mass ratio of the amine-based dispersing agent in this organic solvent dispersion to the silane coupling agent was 25 mass%. In addition, the mass ratios of the silane coupling agent and the amine-based dispersing agent to the titanium dioxide fine particles were 12 mass% and 3 mass%, respectively, and the mass ratio of the total amount of both the agents to the titanium dioxide fine particles was 15 mass%.

(Example 9)

With respect to "Example 3", the titanium dioxide fine particles were changed to TTO-55 B (manufactured by ISHIHARA SANGYO KAISHA, LTD.) (powder). TTO-55 B is produced by a "firing method" as in the case of TTO-51 A, has a rutile type as a crystal type, is surface-treated with aluminum hydroxide ($Al(OH)_3$), and has an average primary particle size of 40 nm. In addition, the component ratio of each material used in the wet dispersion was changed to 23 parts by mass of the titanium dioxide fine particles, 2.8 parts by mass of the silane coupling agent, 0.7 parts by mass of the amine-based dispersing agent and 73.5 parts by mass of the organic solvent. The time of wet dispersion was 6 hours and 40 minutes. Except for the above, an organic solvent dispersion of titanium dioxide fine particles was obtained in the same manner as in "Example 3".

The mass ratio of the amine-based dispersing agent in this organic solvent dispersion to the silane coupling agent was 25 mass%. In addition, the mass ratios of the silane coupling agent and the amine-based dispersing agent to the titanium dioxide fine particles were 12 mass% and 3 mass%, respectively, and the mass ratio of the total amount of both the agents to the titanium dioxide fine particles was 15 mass%.

(Example 10)

With respect to "Example 3", the titanium dioxide fine particles were changed to TTO-55 D (manufactured by ISHIHARA SANGYO KAISHA, LTD.) (powder). TTO-55 D is produced by a "firing method" as in the case of TTO-51 A, has a rutile type as a crystal type, is surface-treated with zirconium oxide ($ZrO_2$) in addition to aluminum hydroxide ($Al(OH)_3$), and has an average primary particle size of 40 nm. In addition, the component ratio of each material used in the wet dispersion was changed to 23 parts by mass of the titanium dioxide fine particles, 2.8 parts by mass of the silane coupling agent, 0.7 parts by mass of the amine-based dispersing agent and 73.5 parts by mass of the organic solvent. The time of wet dispersion was 6 hours and 40 minutes. Except for the above, an organic solvent dispersion of titanium dioxide fine particles was obtained in the same manner as in "Example 3".

The mass ratio of the amine-based dispersing agent in this organic solvent dispersion to the silane coupling agent was 25 mass%. In addition, the mass ratios of the silane coupling agent and the amine-based dispersing agent to the titanium dioxide fine particles were 12 mass% and 3 mass%, respectively, and the mass ratio of the total amount of both the agents to the titanium dioxide fine particles was 15 mass%.

(Example 11)

With respect to "Example 1", the titanium dioxide fine particles were changed to TTO-51 N (manufactured by ISHIHARA SANGYO KAISHA, LTD.). TTO-51 N is produced by a "firing method" as in the case of TTO-51 A, has a rutile type as a crystal type, and has an average primary particle size of 20 nm. TTO-51 N is different from TTO-51 A in that surface treatment with aluminum hydroxide ($Al(OH)_3$) is omitted.

Also, propylene glycol monomethyl ether (PGME) was used as the organic solvent, and the component ratio of each material used in the wet dispersion was set to 26.3 parts by weight of titanium dioxide fine particles, 4.4 parts by weight of a silane coupling agent, 0.8 parts by weight of an amine-based dispersing agent and 68.5 parts by weight of the organic solvent. The time of wet dispersion was 8 hours. Except for the above, an organic solvent dispersion of titanium dioxide fine particles was obtained in the same manner as in "Example 1".

The mass ratio of the amine-based dispersing agent in this organic solvent dispersion to the silane coupling agent was 18 mass%. In addition, the mass ratios of the silane coupling agent and the amine-based dispersing agent to the titanium dioxide fine particles were 17 mass% and 3 mass%, respectively, and the mass ratio of the total amount of both the agents to the titanium dioxide fine particles was 20%.

(Comparative Example 1)

With respect to "Example 1", addition of the amine-based dispersing agent was omitted. That is, the component ratio of each material used in the wet dispersion was changed to 20 parts by mass of the titanium dioxide fine particles, 3 parts by mass of the silane coupling agent and 77 parts by mass of the organic solvent. Except for the above, an organic solvent dispersion of titanium dioxide fine particles was obtained in the same manner as in "Example 1".

The mass ratio of the amine-based dispersing agent in this organic solvent dispersion to the silane coupling agent was 0 mass%. In addition, the mass ratio of the silane coupling agent to the titanium dioxide fine particles was 15 mass%.

(Comparative Example 2)

With respect to "Example 1", the amine-based dispersing agent was changed to BYK (registered trademark) -111 (manufactured by BYK), which is a (non-amine-based) dispersing agent having substantially no basic adsorptive group and having an amine value of less than 1. Except for the above, an organic solvent dispersion of titanium dioxide fine particles was obtained in the same manner as in "Example 1".

The mass ratio of the non-amine-based dispersing agent in this organic solvent dispersion to the silane coupling agent was 25 mass%. In addition, the mass ratios of the silane coupling agent and the non-amine-based dispersing agent to the titanium dioxide fine particles were 12 mass% and 3 mass%, respectively, and the mass ratio of the total amount of both the agents to the titanium dioxide fine particles was 15 mass%.

(Comparative Example 3)

With respect to "Example 1", the mass ratio of the amine-based dispersing agent in the organic solvent dispersion to the silane coupling agent was changed to 100 mass%. Specifically, DISPERBYK (registered trademark)-142 (manufactured by BYK, active ingredient: 60 mass%, amine value: 43 mg KOH/g) was used as the amine-based dispersing agent, and the component ratio of each material used in the wet dispersion was changed to 20 parts by mass of the titanium dioxide fine particles, 1.5 parts by mass of the silane coupling agent, 1.5 parts by mass of the amine-based dispersing agent and 77 parts by mass of the organic solvent. Except for the above, an organic solvent dispersion of titanium dioxide fine particles was obtained in the same manner as in "Example 1".

The mass ratios of the silane coupling agent and the amine-based dispersing agent to the titanium dioxide fine particles in this organic solvent dispersion were 7.5 mass% and 7.5 mass%, respectively, and the mass ratio of the total amount of both the agents to the titanium dioxide fine particles was 15 mass%.

(Comparative Example 4)

With respect to "Example 1", addition of the silane coupling agent was omitted. That is, the component ratio of each material used in the wet dispersion was changed to 20 parts by mass of the titanium dioxide fine particles, 1 part by mass of the amine-based dispersing agent and 79 parts by mass of the organic solvent. Except for the above, an organic solvent dispersion of titanium dioxide fine particles was obtained in the same manner as in "Example 1".

The mass ratio of the amine-based dispersing agent in this organic solvent dispersion to the silane coupling agent was infinite. In addition, the mass ratio of the amine-based dispersing agent to the titanium dioxide fine particles was 5 mass%.

<Evaluation of Dispersibility>

When in the production of the organic solvent dispersions of the examples and the comparative examples, described above, coarse particles were settled by centrifugation after wet dispersion and a supernatant thereof was collected, the solid content concentration of the dispersion liquid before centrifugation was compared with the solid content concentration of the dispersion liquid (i.e., the organic solvent dispersion) after centrifugation. The case where there was little difference in solid content concentration between both the dispersion liquids before and after centrifugation (specifically, the case where the solid content concentration of the dispersion liquid (i.e., the organic solvent dispersion) after centrifugation was 80% or more of the solid content concentration of the dispersion liquid before centrifugation) was evaluated as being excellent in dispersibility ("○"), and the case where the solid content concentration of the dispersion liquid (i.e., the organic solvent dispersion) after centrifugation was less than 80% of the solid content concentration of the dispersion liquid before centrifugation was evaluated as being insufficient in dispersibility ("×"). The evaluation results are shown in Table 1.

<Evaluation of transmittance of organic solvent dispersion>

In the examples and the comparative examples, the organic solvent dispersions were diluted to a filler concentration of 12 g/L using the same organic solvent as the dispersion medium. This was placed in a cell having an optical path length of 1 mm as a measurement sample, and the transmittance was measured with a spectrophotometer (V-770: manufactured by JASCO Corporation). The transmittance was measured as an average value of transmittances at a wavelength of 380 to 780 nm. The measurement results are shown in Table 1. As for all of the organic solvent dispersions of "Comparative Example 1 to 4", the concentration cannot be adjusted due to the settlement, and the transmittance was unmeasurable.

[Table 1]

| | Silane Coupling Agent (①) | Dispersing agent (②) | | Mass ratio (%) of "②/①" | Solvent | Dispersibility evaluation | Transmittance (380-780nm) |
|---|---|---|---|---|---|---|---|
| Example 1 | KBM-503 | Amine-based | Solsperse 20000 | 25 | MEK | ○ | 68.3 |
| Example 2 | | | | 66.7 | MEK | ○ | 69.4 |
| Example 3 | | | | 25 | PGMEA | ○ | 62.5 |
| Example 4 | | | DEM | 25 | MEK | ○ | 66.4 |
| Example 5 | KBM-5103 | | Solsperse 20000 | 25 | PGMEA | ○ | 51.8 |
| Example 6 | KBM-5803 | | Solsperse 20000 | 25 | PGMEA | ○ | 63.7 |
| Example 7 | KBM1083 | | DISPERBYK-163 | 25 | PGMEA | ○ | 55.2 |
| Example 8 | | | Solsperse 20000 | 25 | PGMEA | ○ | 42.7 |
| Example 9 | KBM-503 | | Solsperse 20000 | 25 | PGMEA | ○ | 25.9 |
| Example 10 | | | Solsperse 20000 | 25 | PGMEA | ○ | 21.5 |
| Example 11 | KBM-503 | | Solsperse 20000 | 18 | PGME | ○ | 66.7 |

(continued)

|  | Silane Coupling Agent (①) | Dispersing agent (②) | | Mass ratio (%) of "②/①" | Solvent | Dispersibility evaluation | Transmittance (380-780nm) |
|---|---|---|---|---|---|---|---|
| Comparative Example 1 | KBM-503 | - | Not added | 0 | MEK | × | - |
| Comparative Example 2 | | Non-amine-based | BYK-111 | 25 | MEK | × | - |
| Comparative Example 3 | | Amine-based | DISPERBYK-142 | 100 | MEK | × | - |
| Comparative Example 4 | Not added | | Solsperse 20000 | ∞ | MEK | × | - |

As shown in Table 1, it has been found that in all of "Examples 1 to 11" where the mass ratio of the dispersing agent having a basic adsorptive group to the silane coupling agent is within the range of 15 mass% to 75 mass%, the dispersibility of the titanium dioxide fine particles in the organic solvent is higher as well as the average value of transmittances at a wavelength of 380 to 780 nm was higher, as compared with any of "Comparative Examples 1 to 4" in which the above range does not meet. For example, as for an organic solvent dispersion of titanium dioxide fine particles, it has been found that even when a silane coupling agent and a dispersing agent having a basic adsorptive group are contained together, it is difficult to disperse the titanium dioxide fine particles in an organic solvent if the mass ratio of the dispersing agent to the silane coupling agent is larger than the above range (e.g., "Comparative Example 3").

Also, as shown in "Table 1", in an organic solvent dispersion of titanium dioxide fine particles in "Comparative Example 1" where does not contain a dispersing agent having a basic adsorptive group or in an organic solvent dispersion of titanium dioxide fine particles in "Comparative Example 4" where does not contain a silane coupling agent, it has been difficult to disperse the titanium dioxide fine particles in the organic solvent. In addition, in "Comparative Example 2" where a dispersing agent having no basic adsorptive group is used instead of a dispersing agent having a basic adsorptive group, it has been difficult to disperse the titanium dioxide fine particles in the organic solvent as is the case with the other comparative examples.

As described above, it has been found that in the organic solvent dispersions of the titanium dioxide fine particles in the present examples, a silane coupling agent and a dispersing agent having a basic adsorptive group are contained together, and the mass ratio of the dispersing agent to the silane coupling agent is set to be within an appropriate range (i.e., 15 mass% to 75 mass%), so that high dispersibility can be exhibited as well as a high value can be exhibited as the average value of the transmittances of the organic solvent dispersion at a wavelength of 380-780 nm.

<Preparation of coating composition>

(Production Example 1)

The following materials: 86.6 parts by mass of the organic solvent dispersion (solid content: 21.8%) of titanium dioxide fine particles in Example 8; 8.9 parts by mass of dipentaerythritol hexaacrylate (M-405 manufactured by Toagosei Company, Limited); and 4.5 parts by mass of a PGMEA solution of IRGACURE (registered trademark) -184 and Omnirad (registered trademark) TPO (each concentration is 3 mass%) were mixed to prepare an ultraviolet ray-curable coating composition.

(Production Example 2)

The following materials: 86.3 parts by mass of the organic solvent dispersion (solid content: 22.0%) of titanium dioxide fine particles in Example 9; 9.1 parts by mass of dipentaerythritol hexaacrylate (M-405 manufactured by Toagosei Company, Limited); and 4.6 parts by mass of a PGMEA solution of IRGACURE (registered trademark)-184 and Omnirad (registered trademark) TPO (each concentration is 3 mass%) were mixed to prepare an ultraviolet ray-curable coating composition.

(Production Example 3)

The following materials: 87.3 parts by mass of the organic solvent dispersion (solid content: 21.3%) of titanium dioxide fine particles in Example 10; 8.5 parts by mass of dipentaerythritol hexaacrylate (M-405 manufactured by Toagosei Company, Limited); and 4.2 parts by mass of a PGMEA solution of IRGACURE (registered trademark)-184 and Omnirad (registered trademark) TPO (each concentration is 3 mass%) were mixed to prepare an ultraviolet ray-curable coating composition.

(Production Example 4)

The following materials: 45.9 parts by weight of the organic solvent dispersion (solid content: 29.7%) of titanium dioxide fine particles in "Example 11"; 20.3 parts by weight of dipentaerythritol hexaacrylate (M-405 manufactured by Toagosei Company, Limited); 10.1 parts by weight of an isopropanol solution of IRGACURE (registered trademark)-184 (10 mass%), and 23.6 parts by weight of PGME were mixed to prepare an ultraviolet ray-curable coating composition.

<Measurement of refractive index and the like of coting film>

Each of the coating solutions of "Production Examples 1, 2 and 4" was applied to a glass substrate, preliminarily dried at 80°C for 5 minutes, and then cured by irradiation with a high-pressure mercury lamp to form three coating films having different thicknesses. Also, the coating solution of "Production Example 3" was applied to a PET film (A4100 manufactured by TOYOBO CO., LTD.), preliminarily dried at 80°C for 5 minutes, and then cured by irradiation with a high-pressure mercury lamp to form three coating films having different thicknesses.

Each haze of the obtained coating films was measured with a haze meter (NDH-5000 manufactured by Nippon Denshoku Industries Co., Ltd.), and the thickness and the refractive index at a measurement wavelength of 589 nm for the coating film were measured with an ellipsometer (SmartSE manufactured by HORIBA, Ltd.). The results are shown in Table 2.

[Table 2]

| Production Example | Film thickness [nm] | Haze [%] | Refractive index (589nm) |
| --- | --- | --- | --- |
| 1 | 575 | 1.00 | 1.782 |
| | 230 | 0.62 | 1.794 |
| | 110 | 0.52 | 1.823 |
| 2 | 438 | 1.24 | 1.790 |
| | 201 | 0.75 | 1.850 |
| | 107 | 0.52 | 1.922 |
| 3 | 491 | 0.85 | 1.792 |
| | 222 | 0.64 | 1.814 |
| | 104 | 0.52 | 1.868 |
| 4 | 1176 | 1.06 | 1.613 |
| | 683 | 0.65 | 1.615 |
| | 311 | 0.46 | 1.637 |

As shown in Table 2, a coating film having a small haze and a large refractive index can be formed when the coating composition of the present invention is used. Specifically, the formation of a film having a haze of 1.5% or less and a refractive index of 1.6 or more at a measurement wavelength of 589 nm has been achieved.

**INDUSTRIAL APPLICABILITY**

When the organic solvent dispersion of titanium dioxide fine particles according to the present invention is used, a coating film having high visible light transmittance (i.e., transparency) can be formed. Specifically, a hard coat, an ultraviolet ray shielding film or the like having a high visible light transmittance (i.e., transparency) and a high refractive index can be formed on a surface of a synthetic resin lens or film. In addition, the dispersion of titanium dioxide fine particles in an organic solvent can be preferably used for production of a high-refractive-index layer and an antireflection film used for a liquid crystal display (LCD), a flat panel display (FPD) and the like, which are required to have a higher transparency.

**Claims**

1. An organic solvent dispersion of titanium dioxide fine particles, comprising titanium dioxide fine particles, an organic solvent, a silane coupling agent, and a dispersing agent having a basic adsorptive group, wherein a mass ratio of the dispersing agent to the silane coupling agent is 15 mass% to 75 mass%.

2. The organic solvent dispersion of titanium dioxide fine particles according to claim 1, wherein a mass ratio of a total amount of the silane coupling agent and the dispersing agent having a basic adsorptive group to the titanium dioxide fine particles is 10 mass% to 40 mass%.

3. The organic solvent dispersion of titanium dioxide fine particles according to claim 1 or 2, wherein a surface of the titanium dioxide fine particles is coated with an oxide and/or hydroxide of aluminum.

4. The organic solvent dispersion of titanium dioxide fine particles according to any one of claims 1 to 3, wherein the titanium dioxide fine particles have a rutile-type crystal.

5. A method for producing an organic solvent dispersion of titanium dioxide fine particles, the method comprising the step of dispersing, in an organic solvent, the titanium dioxide fine particles, a silane coupling agent, and a dispersing agent having a basic adsorptive group.

6. The production method according to claim 5, wherein a mass ratio of the dispersing agent having a basic adsorptive group to the silane coupling agent is 15 mass% to 75 mass%.

7. The production method according to claim 5 or 6, wherein the dispersing step is conducted by a wet dispersion using a bead medium.

8. A coating composition comprising at least the organic solvent dispersion of titanium dioxide fine particles according to any one of claims 1 to 4 and a binder resin.

9. A coating film comprising the organic solvent dispersion of titanium dioxide fine particles according to any one of claims 1 to 4 or the coating composition according to claim 8.

<div align="center"><b>INTERNATIONAL SEARCH REPORT</b></div>

| International application No. |
|---|
| PCT/JP2020/043249 |

**A.  CLASSIFICATION OF SUBJECT MATTER**
C01G  23/047(2006.01)i;  C09C  1/36(2006.01)i;  C09C  3/06(2006.01)i;  C09D
17/00(2006.01)i;  C09D  201/00(2006.01)i;  C09D  7/61(2018.01)i;  C09D
7/63(2018.01)i; C09D 7/65(2018.01)i
FI:        C09D17/00;    C01G23/047;    C09D201/00;    C09D7/63;    C09D7/65;
           C09D7/61; C09C1/36; C09C3/06
According to International Patent Classification (IPC) or to both national classification and IPC

**B.  FIELDS SEARCHED**

Minimum documentation searched (classification system followed by classification symbols)
C01G23/047; C09C1/36; C09C3/06; C09D1/00-201/00

Documentation searched other than minimum documentation to the extent that such documents are included in the fields searched
         Published examined utility model applications of Japan          1922–1996
         Published unexamined utility model applications of Japan         1971–2021
         Registered utility model specifications of Japan                 1996–2021
         Published registered utility model applications of Japan         1994–2021

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | JP 2012-158664 A (CANON CHEMICALS INC.) 23 August 2012 (2012-08-23) paragraphs [0027], [0035], [0095]-[0106], [0118], example 7 | 1, 3-9 |
| Y | paragraphs [0035] | 3 |
| Y | JP 2012-149197 A (CANON CHEMICALS INC.) 09 August 2012 (2012-08-09) claim 1, paragraphs [0005], [0008], [0018], [0031], [0074], [0083]-[0084], [0105]-[0110], example 1 | 1-9 |
| Y | JP 2013-203929 A (ISHIHARA SANGYO KAISHA, LTD.) 07 October 2013 (2013-10-07) claim 1, paragraphs [0008]-[0010], [0012], [0020]-[0021], [0025]-[0027], tables 1-2, examples 1-5 | 1-9 |
| A | JP 2009-227500 A (TAYCA CORPORATION) 08 October 2009 (2009-10-08) entire text | 1-9 |
| A | WO 2013/031799 A1 (SUMITOMO OSAKA CEMENT CO., LTD.) 07 March 2013 (2013-03-07) entire text, all drawings | 1-9 |

☐  Further documents are listed in the continuation of Box C.      ☒  See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 15 January 2021 (15.01.2021) | 26 January 2021 (26.01.2021) |

| Name and mailing address of the ISA/<br>      Japan Patent Office<br>      3-4-3, Kasumigaseki, Chiyoda-ku,<br>      Tokyo 100-8915, Japan | Authorized officer<br><br><br>Telephone No. |
|---|---|

Form PCT/ISA/210 (second sheet) (January 2015)

| International application no. |
|---|
| PCT/JP2020/043249 |

| Patent Documents referred in the Report | Publication Date | Patent Family | Publication Date |
|---|---|---|---|
| JP 2012-158004 A | 23 Aug. 2012 | (Family: none) | |
| JP 2012-149197 A | 09 Aug. 2012 | (Family: none) | |
| JP 2013-203929 A | 07 Oct. 2013 | (Family: none) | |
| JP 2009-227500 A | 08 Oct. 2009 | (Family: none) | |
| WO 2013/031799 A1 | 07 Mar. 2013 | US 2014/0200801 A1 entire text, all drawings | |

Form PCT/ISA/210 (patent family annex) (January 2015)

**EP 4 067 309 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014132607 A1
- JP 2009227500 A